# EUROPEAN PATENT SPECIFICATION

(11) **EP 1 548 067 B1**
(45) Date of publication and mention of the grant of the patent: **30.08.2006**
(21) Application number: 04030833.0
(22) Date of filing: 27.12.2004
(51) Int. Cl.: C08L 101/00, C08L 79/08, F04B 27/08, C09D 179/08

(54) **Sliding material comprising flat fluoroplastic particles and binder resin**
Gleitwerkstoff enthaltend flache Fluoropolymerpartikel und Bindemittel
Materiau glissant comprenant des particules plates de fluoropolymère et un liant

(30) Priority: 25.12.2003 JP 2003429966
(43) Date of publication of application: 29.06.2005
(73) Proprietor: TAIHO KOGYO CO., LTD., Toyota-shi, Aichi 471-8502 (JP)
(72) Inventor: Hakamata, Mitsuaki, Toyota-shi Aichi 471-8502 (JP); Kabeya, Yasunori, Toyota-shi Aichi 471-8502 (JP); Kanayama, Hiroshi, Toyota-shi Aichi 471-8502 (JP)
(74) Representative: Kador & Partner

(56) References cited:
- EP-A- 1 262 662
- EP-A- 1 489 152
- WO-A-03/010237

## Description

### Field of Invention

The present invention relates to sliding material, particularly sliding material comprising fluorine plastic and binder resin for bonding the fluorine plastic, more particularly, the sliding material, which is suited for depositing on the sliding surface of a swash plate of a swash-plate compressor.

### Background of Invention

Fluorine plastic exhibits excellent low-friction property under dry lubricating condition. However, in order to improve the wear resistance of the fluorine plastic-based sliding member, the fluorine plastic is blended with a solid lubricant such as MoS₂ or graphite and bonded with base resin.

In the prior art, in order to improve the sliding properties of the fluorine-plastic based sliding material, the proportion ratio or amount, and the particle diameter of the additives, have been adjusted.

For example, it is disclosed in Japanese Unexamined Patent Publication No. 7-97517 that a sliding material, which consists of from 50 to 73% by weight of at least one of polyamide resin and polyimide resin, from 3 to 15% by weight of polytetrafluoroethylene (PTFE) resin as solid lubricant, from 20 to 30% of molybdenum disulfide (MoS₂) and from 2 to 8% by weight of graphite, exhibits improved wear resistance and initial compatibility under the conditions of lubrication by graphite contained in the gray cast iron, low sliding speed of from 0.08 to 1 m/s, and relatively low load. This material is appropriate for use as the surface layer of a piston skirt.

It is disclosed in Japanese Unexamined Patent Publication No. 2000-136397 that a sliding material, which contains from 10 to 40% by weight of calcined granular PTFE and from 3 to 40% by weight of graphite, the balance being a binder resin, i.e., polyimide and/or polyamide imide, exhibits improved sliding properties under dry condition, and is appropriate as the sliding material of a wiper arm, which is operated under a low speed of 20 mm/s and relatively low load. The granular calcined PTFE is prepared by means of forming PTFE powder by suspension polymerization or emulsion polymerization, heating the resultant PTFE powder to melting temperature, i.e., calcining, and then pulverizing the calcined PTFE powder.

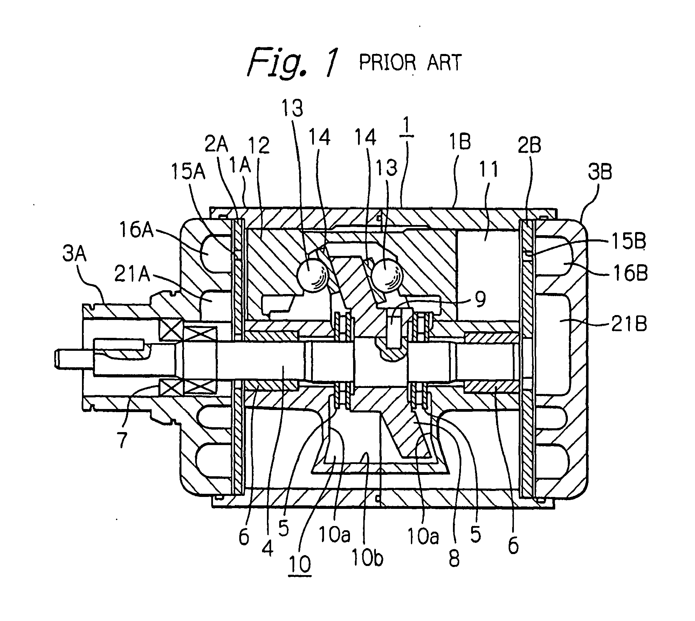

A swash-plate type compressor, an example of which is shown in Fig. 1, comprises the following members: cylinder block 1; valve plates 2; cylinder heads 3; a driving shaft 4; thrust bearings 5; radial bearings 6; a mechanical seal 7; a swash plate 8; a swash-plate chamber 10, in which the swash plate 8 is mounted; a cylinder bore 11; a piston 12; balls 13; ports 15 formed through the valve plates 2; and ejecting chambers 16; ports (not shown) communicated with the ejecting chambers16; the ejecting chambers (not shown); and suction chambers 21. In such swash-plate type compressor, the driving shaft 4 is rotary driven so as to rotate the swash plate 8 which is integral with the driving shaft 4. Along with the rotation of the swash plate 8, the piston 12 is reciprocated, thereby compressing cooling media within the cylinder bore 11. The compressed cooling media are ejected into the respective ejection chambers 16A, 16B via the ports 15A, 15B, respectively. The compressed cooling media is then sucked into the cylinder bore 11 via the ports 17, the ejection ports 19, ports 20, a pair of the suction chambers 21A, 21B, not-shown sucking valves, and ports 15 A formed through the valve plate 2A. The lubricating oil contained in the compressed cooling media is introduced into the swash-plate chamber 10 under a mist condition and is fed to the sliding portions of the swash plate 8, the thrust bearings 5 and the like.

The prior art related to the surface treatment of a swash plate of the swash-plate type compressor includes the following.
(1) European Patent No. 713972B1. A Cu or Al alloy is flame-sprayed, and if necessary, a Pb or Sn coating is, then, plated on the flame-sprayed layer.
(2) USP No. 6,123,009. A flame-sprayed Cu layer is coated with MoS₂ or PTFE coating film.
(3) Japanese Examined Patent Publication No. 02-002475. A solid-lubricant layer is formed on an aluminum-alloy substrate.
(4) Japanese Unexamined Patent Publication No. 2000-265953. Metallic particles are incorporated in the resin layer.
(5) Japanese Unexamined Patent Publication No. 2002-005013.
   Amorphous hard carbon (DLC) film is formed on the swash plate.
(6) Japanese Unexamined Patent Publication No. 2002-036902.
   A coating film consisting of a mixture of a solid lubricant and PEEK resin is formed on the swash plate.
(7) Japanese Unexamined Patent Publication No. 2002-89437 A coating film consisting of a mixture of solid lubricant and earthy graphite resin is formed on the swash plate.
(8) Japanese Unexamined Patent Publication No. 2002-180961.

A resin coating or a plating layer is deposited on the surface of a sintered layer.

The PTFE contained in the coating composition according to the prior art (2) mentioned above exhibits a low-friction effect at the sliding with shoes, under such a lubricating oil poor sliding condition that a swash-plate type compressor mounted in a vehicle is started and driven to rotate and is lubricated only by the cooling media. Specifically, heat generation is suppressed by PTFE. On the other hand, when it is desired to rapidly cool the interior of a vehicle, the swash-plate type compressor is operated under the sliding conditions of high speed and high load. In this case, the PTFE contained in the coating composition undergoes serious peeling wear so that the surface is drastically damaged and seizure occurs.

The surface treatment according to the prior art (1) mentioned above provides a coating film consisting only of metal. There is a possibility that the swash plate subjected to this surface treatment may seize with respect to the opposite member, i.e., the shoes, under poor lubricating-oil operating conditions.

The surface treatments according the prior arts (3), (4), (6), and (7) mentioned above provide a solid-lubricant coating film on the surface of metal. This coating film may incur under such recent sliding conditions as high-speed rotation and high load a problem of peeling.

The surface coating of DLC according to the prior art (5) mentioned above may crack under the reciprocating load like the case of resin coating film.

The prior art (8) mentioned above provides a resin coating layer or a plating layer on the sintered metallic layer. Since the contact area between the resin coating layer and the sintered metal is larger than that of such layer and the non-sintered and hence non-porous metal, peeling of the resin coating layer is impaired. However, fundamentally, the peeling of the resin coating cannot be prevented, because the resin is of low strength and cannot withstand the load from the shoes.

### SUMMARY OF INVENTION

It is, therefore, an object of the present invention to improve the sliding properties of a sliding material which is subjected to high speed and high load and is used under varying sliding conditions with and without lubricating oil.

It is a particular object of the present invention to lessen the peeling wear of the sliding material containing PTFE and to modify its wear mechanism such that little wear occurs gradually and hence an improved compatible surface is formed.

In accordance the objects of the present invention, there is provided a sliding material, which comprises flat fluorine-plastic particles having an average aspect ratio of from 1.5 to 10 and binder resin.

There is also provided a sliding material, which comprises fluorine-plastic particles having a flat ratio of from 1.5 to 10 in terms of the average aspect ratio and binder resin.

The fluorine plastic is preferably at least one selected from the group consisting of polytetrafluoroethylene (PTFE), tetrafluoroethylene perfluoroalkyl vinyl ether copolymer (PFA), perfluoroethylene propylene tetrafluoroethylenen hexafluoropylene(FEP), ethylene-tetrafluoroethylene copolymer (ETFE), polyvinyldenefluoride (PVdF), and ethylene-chlorotrifluoroethylene copolymer (ECTFE).

In the description hereinafter, the fluorine plastic is described by referring to a representative example of PTFE.

The granular PTFE particles have smaller surface area than the flat PTFE particles. The bonding strength of the former particles with the binder is, therefore, lower than that of the latter particles. The former particles are, therefore, liable to separate from the binder, so that peeling of PTFE is induced. Contrary to this, the sliding material comprising the flat PTFE particles bonded with the binder has improved compatibility such that fluid lubrication can be realized on the surface of the sliding material.

Meanwhile, under such oil poor condition at the initial sliding period that only the cooling media lubricates, PTFE exhibits low-friction property independently upon the shape of PTFE particles. The friction between the PTFE-containing sliding material and a shoe is, therefore low during sliding. Specifically, the extremely thin surface of the PTFE particles having a thickness of few atom-layers is subject to cleavage. This process takes place even under extremely weak external force, so that satisfactorily low friction is realized.

### BRIEF DESCRIPTION OF DRAWINGS

Figure 1 is a cross-sectional drawing of a swash-plate type compressor according to an example.
Figure 2 is a graph showing a relationship between the average aspect ratio of the PTFE particles and the seizure time of the PTFE based sliding material. The average aspect ratio in a range of from 1 to 5 is shown in a larger scale than that of from 5 to 10 and 10 to 15.
Figure 3 is a schematic drawing of a sliding layer, which contains flat PTFE, graphite and MoS₂.

### DESCRIPTION OF PREFERRED EMBODIMENTS

The granular PTFE particles can be flattened by means of imparting strong shear blending. A bead mill blender, which can perform strong shear blending, was used to prepare the solid-lubricant coating-mixture, which may be referred to as the paint. The average aspect ratio of PTFE particles and the blending time of the paint were investigated. The seizure time in dependent on the average aspect ratio was also investigated.

The composition of the paint was 60 % by volume of PAI, 20% by volume of PTFE, and 20% by volume of graphite for every blended mixture with the varied average aspect ratio.

The testing condition was as follows.
Testing Machine: 3 pin/disc type seizure tester
Load: 1.2 kN
Number of Revolutions: 1000 rpm
Lubricating Condition: R 134 gas
Opposite Shaft: SUJ 2 (shoe form)

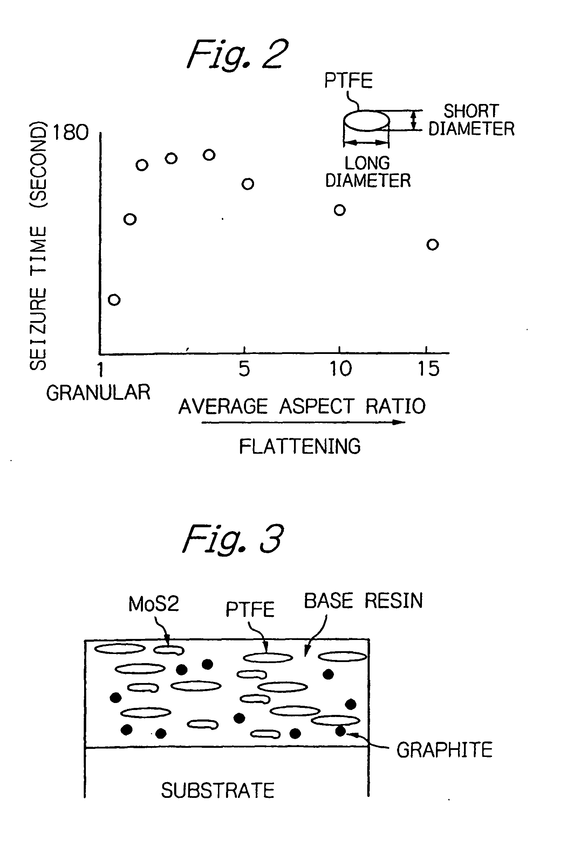

As is clear from Fig. 2, the seizure time increases with increase in the average aspect ratio up to approximately 2. The seizure time then decreases because the strength of PTFE decreases excessively due to flattening. Based on this result, the average aspect ratio of the PTFE particles is limited in a range of from 1.5 to 10 according to the present invention. A preferable average aspect ratio is from 2 to 5. The PTFE particles present on a surface area of 1 mm × 20 *µ*m were measured in terms of the ratio of long diameter/short diameter, and the average value of the measured values was calculated as the average aspect ratio.

The binder is selected from a heat-resistant resin and is preferably at least one selected from polyamide imide and polyimide. Proportion of the fluorine plastic particles is preferably from 5 to 40 % by volume, more preferably from 15 to 35% by volume based on the total volume of the fluorine plastic particles and binder, or the total volume of the fluorine plastic particles, the wear-resistant additives and/or the solid lubricant, and the binder. Either of these volumes is hereinafter referred to as the total volume.

If necessary, at least one solid lubricant selected from the group consisting of MoS₂ and graphite is contained in a proportion of from 2 to 20% by volume based on the total volume. The balance is from 98 to 80 % by volume of the fluorine-plastic particles and the binder resin.

At least one wear resistant additive selected from the group consisting of SiO₂, TiO₂, SiC and Al₂O₃ may be contained in a proportion of from 0.1 to 5.0 % by volume based on the total volume. The balance is from 99.9 to 95.0% by volume of the fluorine-plastic particles and the binder resin.

When the paint is subjected to strong shear blending, the granular PTFE contained is flattened in the paint. For example, the calcined fluorine plastic having from 2 to 20 *µ*m of average particle diameter may be blended with the other starting materials within a bead mill developed by IPROS Corporation, and the sliding material according to the present invention may be thus prepared.

The sliding material according to the present invention can be preferably used for, for example, the sliding layer of a swash-plate type compressor and the like, which is operated under high pressure and high speed and lubricating oil supplied on the sliding surface.

### EXAMPLES

The paint having the blended composition shown in Tables 1 and 2 was subjected to blending with a propeller mixing (Comparative Example, untreated PTFE) and blending with strong shear blending by means of a bead mill (Examples, flattened PTFE).

The respective components were as follows.
PTFE: product of Kitamura Co., Ltd., KTL-8N
PAI: product of Hitachi Kasei Co., Ltd., HPC-6000
MoS₂: the average particle-diameter - 25 *µ*m; a product of Sumitomo Mining Lubricant Co., Ltd, Molypowder PB
Graphite: the average particle-diameter - 1 *µ*m, a product of Nippon Graphite Co., Ltd., CSSP

The prepared powder was applied on the substrate of a swash-plate to provide a coating thickness of 20 *µ*m, and the surface of the coating was polished to form approximately 0.3 *µ*m Rz of roughness.

The testing condition was under no lubrication of the lubricant oil and as follows.
Testing Machine: 3 pin/disc type seizure tester
Load: 1.2 kN (4MPa)
Number of Revolutions: 1000 rpm (4.2m/s)
Lubricating Condition: R 134 gas
Opposite Shaft: SUJ 2 (shoe form)

The test results are shown in Table 1.

**Table 1**

| | Proportion of Resin Components vol% | | | | Test Result |
|---|---|---|---|---|---|
| | PAI | MoS₂ | Gr | PTFE | Seizure Time (s) |
| Example PTFE-Flattening (Average Aspect Ratio-3) | 55 | 20 | 15 | 10 | 140~160 |
| | 60 | - | 20 | 20 | 180 or more |
| Comparative Example PTFE Untreated (Average Aspect Ratio-1) | 55 | 20 | 15 | 10 | 120~140 |
| | 60 | - | 20 | 20 | 130~160 |

It is apparent from Table 1 that the inventive examples are superior to the comparative examples in view of the seizure resistance.

The test conditions was under lubrication of lubricating oil and cooling media and were as follows.
Testing Machine: high-pressure environmental-gas friction tester
Lubrication: circulation type (ice-machine oil + chlorofluoorcaron gas)
Load: 2MPa/15 minutes, successive increase to 16 MPa at the maximum
Number of Revolutions: 7200 rpm
Opposite Shaft: SUJ 2 (shoe form)

The test results are as follows.

**Table 2**

| | Proportion of Resin Components vol% | | | | Test Result | |
|---|---|---|---|---|---|---|
| | PAI | MoS₂ | Gr | PTFE | Seizure | Wear |
| Example PTFE-Flattening (Average Aspect Ratio-3) | 55 | 20 | 15 | 10 | none | 3*µ*m |
| | 60 | - | 20 | 20 | non | 8*µ*m |
| Comparative Example PTFE Untreated (Average Aspect Ratio-1) | 55 | 20 | 15 | 10 | none | 5*µ*m Slight Peeling |
| | 60 | ― | 20 | 20 | Seizure | Peeling |

It is apparent from Table 2 that no peeling occurs in the inventive examples.

As is described hereinabove, the present invention provides sliding material with small wear and free of peeling, when used as the sliding material on a swash plate of a swash-plate type compressor.

## Claims

1. Sliding material, which comprises fluorine-plastic particles having a flat ratio of from 1.5 to 10 in terms of an average aspect ratio and binder resin.

2. Sliding material according to claim 1, wherein said fluorine- plastic is at least one selected from the group consisting of polytetrafluoroethylene (PTFE), tetrafluoroethylene perfluoroalkylvinyl ether copolymer (PFA), tetrafluoroethylen - hexafluoropylene (FEP), ethylene-tetrafluoroethylene copolymer (ETFE), polyvinylidenfluoride (PVdF), and ethylene-chlorotrifluoroethylene copolymer (ECTFE).

3. Sliding material according to claim 1 or 2, wherein said fluorine- plastic particles are obtainable from calcined fluorine plastic, which has from 2 to 20 µm of average particle diameter and which is then crushed.

4. Sliding material according to any one of claims 1 through 3, wherein said binder resin is at least one selected from the group consisting of polyamide imide and polyimide.

5. Sliding material according to claim 2 consisting of from 5 to 40 % by volume of said fluorine plastic particles and from 95 to 60 % by volume of said resin binder in balance.

6. Sliding material according to claim 1, further comprising from 2 to 40% by volume of a solid lubricant selected from the group consisting of MoS₂ and graphite, the balance being said fluorine-plastic particles and said binder resin in an amount of from 98 to 60% by volume.

7. Sliding material according to claim 1, further comprising from 0.1 to 5.0% by volume of a wear-resistant additive selected from the group consisting of SiO₂, TiO₂, SiC and Al₂O₃., the balance being said fluorine-plastic particles and said binder resin in an amount of from 99.9 to 95.0% by volume.

8. Sliding material according to claim 1, further comprising from 2 to 40% by volume of a solid lubricant, and from 0.1 to 5.0 % by volume of a wear-resistant additive selected from the group consisting of SiO₂, TiO₂, SiC and Al₂O₃., the balance being said fluorine plastic and said binder resin.

9. Swash plate of a swash-plate type compressor comprising on a sliding portion a coating of a sliding material according to any one of claims 1 through 8.

## Patentansprüche

1. Gleitwerkstoff, der Fluor-Kunststoffpartikel mit einem Flachheitsverhältnis von 1,5 bis 10, ausgedrückt durch ein durchschnittliches Schlankheitsverhältnis, und ein Bindeharz umfasst.

2. Gleitwerkstoff nach Anspruch 1, bei dem der Fluor-Kunststoff wenigstens einer der Stoffe ist, die aus der Gruppe ausgewählt sind, die besteht aus: Polytetrafluorethylen (PTFE), Tetrafluorethylen-Perfluoralkylvinyl-Ether-Copolymer (PFA), Tetrafluorethylen-Hexafluorpylen (FEP) Ethylen-Tetrafluorethylen-Copolymer (ETFE), Polyvinylidenfluorid (PVdF) und Ethylen-Chlortrifluorethylen-Copolymer (ECTFE).

3. Gleitwerkstoff nach Anspruch 1 oder 2, bei dem die Fluor-Kunststoffpartikel erhalten werden können aus calciniertem Fluor-Kunststoff, der einen durchschnittlichen Partikeldurchmesser von 2 bis 20 µm besitzt und anschlie-ßend zertrümmert wird.

4. Gleitwerkstoff nach einem der Ansprüche 1 bis 3, bei dem das Bindeharz wenigstens ein Harz aus der Gruppe ist, die aus Polyamid-Imid und Polyimid besteht.

5. Gleitwerkstoff nach Anspruch 2, der aus 5-40 Vol.-% der Fluor-Kunststoffpartikel und aus 95 bis 60 Vol.-% des Harzbinders im Gleichgewicht besteht.

6. Gleitwerkstoff nach Anspruch 1, der ferner 2 bis 40 Vol.-% eines festen Schmiermittels enthält, das aus der Gruppe ausgewählt ist, die besteht aus MoS₂ und Graphit, wobei das Gleichgewicht derart ist, dass die Fluor-Kunststoffpartikel und das Bindeharz in einer Menge von 98 bis 60 Vol.-% vorliegen.

7. Gleitwerkstoff nach Anspruch 1, der ferner 0,1 bis 5,0 Vol.-% eines verschleißbeständigen Additivs enthält, das aus der Gruppe ausgewählt ist, die aus SiO₂, TiO₂, SiC und Al₂O₃ besteht, wobei das Gleichgewicht derart ist, dass die Fluor-Kunststoffpartikel und das Bindeharz in einer Menge im Bereich von 99,9 bis 95,0 Vol.-% vorliegen.

8. Gleitwerkstoff nach Anspruch 1, der ferner 2 bis 40 Vol.-% eines festen Schmiermittels enthält und 0,1 bis 5,0 Vol.-% eines verschleißbeständigen Additivs, das aus der Gruppe ausgewählt ist, die aus SiO₂, TiO₂, SiC und Al₂O₃ besteht, enthält, wobei das Gleichgewicht der Fluorkunststoff und das Bindeharz sind.

9. Taumelscheibe eines Taumelscheibenkompressors, der an einem Gleitabschnitt eine Beschichtung aus einem Gleitwerkstoff nach einem der Ansprüche 1 bis 8 aufweist.

## Revendications

1. Matériau glissant comprenant des particules de matière plastique fluorée ayant un rapport d'aplatissement de 1,5 à 10 correspondant à un rapport d'aspect moyen, et une résine liante.

2. Matériau glissant selon la revendication 1, dans lequel ladite matière plastique fluorée, est au moins une matière choisie parmi le groupe consistant en le polytétrafluoroéthylène (PTFE), un copolymère de tétrafluoroéthylène et d'éther de perfluoroalkyle et de vinyle (PFA), un tétrafluoroéthylène hexafluoropropylène (FEP), un copolymère d'éthylène tétrafluoroéthylène (ETFE), le fluorure de polyvinylidène (PVdF) et un copolymère éthylène chlorotrifluoroéthylène (ECTFE).

3. Matériau glissant selon la revendication 1 ou 2, dans lequel lesdites particules de matière plastique fluorée sont susceptibles d'être obtenues à partir d'une matière plastique fluorée calcinée, ayant un diamètre particulaire moyen de 2 à 20 µm, qui est ensuite broyée.

4. Matériau glissant selon l'une quelconque des revendications 1 à 3, dans lequel ladite résine liante est au moins une résine sélectionnée dans le groupe consistant en les composés polyamide imide et polyimide.

5. Matériau glissant selon la revendication 2, constitué de 5 à 40 % en volume desdites particules de matière plastique fluorée, et pour le reste de 95 à 60 % en volume de ladite résine liante.

6. Matériau glissant selon la revendication 1, comprenant en outre de 2 à 40 % en volume d'un lubrifiant solide choisi parmi le groupe consistant en MoS₂ et le graphite, le reste étant lesdites particules de matière plastique fluorée et en ladite résine liante, en une quantité de 98 à 60 % en volume.

7. Matériau glissant selon la revendication 1, comprenant en outre de 0,1 à 5,0 % en volume d'un additif résistant à l'usure choisi parmi le groupe consistant en SiO₂, TiO₂, SiC et Al₂O₃, le reste étant ladite matière plastique fluorée et ladite résine liante en une quantité de 99,9 à 95,0 % en volume.

8. Matériau glissant selon la revendication 1, comprenant en outre de 2 à 40 % en volume d'un lubrifiant solide, et de 0,1 à 5,0 % en volume d'un additif résistant à l'usure choisi parmi le groupe consistant en SiO₂, TiO₂, SiC et Al₂O₃, le reste étant ladite matière plastique fluorée et ladite résine liante.

9. Plateau oscillant d'un compresseur de type à plateau oscillant, comprenant sur une partie coulissante un revêtement d'un matériau glissant selon l'une quelconque des revendications 1 à 8.
